Europäisches Patentamt

European Patent Office

Office européen des brevets

(19)

(11) EP 0 660 803 B1

(12)

# EUROPEAN PATENT SPECIFICATION

(45) Date of publication and mention
of the grant of the patent:
**08.01.1997   Bulletin 1997/02**

(21) Application number: **93921571.1**

(22) Date of filing: **14.09.1993**

(51) Int Cl.6: **C01G 28/02**, C02F 9/00,
C01B 7/19

(86) International application number:
**PCT/US93/08677**

(87) International publication number:
**WO 94/06716 (31.03.1994 Gazette 1994/08)**

(54) **PROCESS FOR CONVERTING HEXAFLUOROARSENIC ACID OR ANY SALT THEREOF TO A WATER INSOLUBLE ARSENATE SALT WHICH CAN THEN BE RENDERED NONHAZARDOUS**

VERFAHREN ZUR UMSETZUNG VON HEXAFLUORARSENSÄURE ODER DEREN SALZE IN EIN WASSERUNLÖSLICHES ARSENATSALZ DAS DANN UNSCHÄDLICH GEMACHT WERDEN KANN

PROCEDE DE CONVERSION D'ACIDE HEXAFLUOROARSENIQUE OU D'UN SEL DUDIT ACIDE EN ARSENIATE INSOLUBLE DANS L'EAU QUI PEUT ETRE ENSUITE RENDU NON DANGEREUX

(84) Designated Contracting States:
**DE FR GB**

(30) Priority: **17.09.1992   US 947643**

(43) Date of publication of application:
**05.07.1995   Bulletin 1995/27**

(73) Proprietor: **AlliedSignal Inc.**
**Morristown, New Jersey 07962-2245 (US)**

(72) Inventors:
• **REDMON, Charles, Lewis**
**Orchard Park, NY 14127 (US)**
• **SUBBANNA, Somanahalli, Naranappa**
**East Amherst, NY 14051 (US)**
• **SMITH, Robert, Andrew**
**Kinnelon, NJ 07405 (US)**

(74) Representative: **Hucker, Charlotte Jane et al**
**Gill Jennings & Every**
**Broadgate House,**
**7 Eldon Street**
**London EC2M 7LH (GB)**

(56) References cited:
**EP-A- 0 387 853        EP-A- 0 389 661**
**GB-A- 2 082 564        US-A- 5 089 241**

Description

BACKGROUND OF THE INVENTION

This invention relates to a process for the conversion of hazardous hexafluoroarsenic acid or any salt thereof contained in an aqueous mixture to a form that can be made nonhazardous. More particularly, this invention provides a process for converting hazardous hexafluoroarsenic acid ($HAsF_6$) or any salt thereof such as potassium hexafluoroarsenate ($KAsF_6$), sodium hexafluoroarsenate ($NaAsF_6$), ammonium hexafluoroarsenate ($NH_4AsF_6$), calcium hexafluoroarsenate ($Ca(AsF_6)_2$), and magnesium hexafluoroarsenate ($Mg(AsF_6)_2$) contained in an aqueous mixture to a solid water insoluble arsenate salt of calcium or magnesium salt or a mixture thereof which can then be rendered nonhazardous by the best developed available technology.

A method generally employed in the manufacture of hydrogen fluoride involves heating a mixture of fluorspar and sulfuric acid in a rotating furnace; see for example the method of commonly assigned U.S. Patent 3,718,736. The industrial grade anhydrous hydrogen fluoride obtained contains large quantities of undesirable impurities such as arsenic because the starting material, fluorspar, contains arsenic, and this arsenic cannot be removed in a distillation process. The industrial grade anhydrous hydrogen fluoride generally contains about 50-500 ppm of arsenic impurity.

The presence of arsenic impurity in anhydrous hydrogen fluoride at these levels is highly undesirable for many applications. Anhydrous hydrogen fluoride is used in the refining and chemical manufacturing industries and arsenic impurities in anhydrous hydrogen fluoride can poison the catalyst and contaminate the manufactured product which adversely affects the product quality. In the electronics industry, aqueous solutions of hydrogen fluoride are used as cleaning agents and etchants in the manufacture of semiconductors, diodes, and transistors. A high degree of purity and very low levels of arsenic in anhydrous hydrogen fluoride are required to prevent minute quantities of arsenic impurity from remaining on the surfaces of the electronic industry products after they have been cleaned or etched with hydrogen fluoride. Furthermore, arsenic in anhydrous hydrogen fluoride can ultimately cause an environmental problem for the end user.

Commonly assigned U.S. Patents 4,756,899 and 4,929,435 provide processes for manufacturing high purity anhydrous hydrogen fluoride having low levels of arsenic impurity by contacting anhydrous hydrogen fluoride product, or an intermediate product obtained during the manufacture of anhydrous hydrogen fluoride with hydrogen peroxide in the presence of a catalyst.

The preceding processes for manufacturing high purity anhydrous hydrogen fluoride and other processes involve a distillation step wherein the commercial grade anhydrous hydrogen fluoride is separated from the impurities by distillation. These impurities plus some anhydrous hydrogen fluoride collect in the bottom of the distillation column. A typical make-up of such a mixture which collects in the distillation column bottom is about 75 to about 95 percent by weight hydrogen fluoride, about 2 to about 20 percent by weight water, up to about 5 percent by weight sulfuric acid, and up to about 5 percent by weight hexafluoroarsenic acid or salt thereof.

This typical distillation column bottom presented the following two problems to the industry. First, the waste contained hexafluoroarsenic acid or salts thereof. The practice in the industry was to purify a small portion of the total production and then either recycle the distillation bottoms to the process or ship the distillation bottoms to a hazardous waste site. The first option reduced the capacity for purified hydrogen fluoride while the second option was expensive and not allowed without pretreatment because of the problems associated with converting the hexafluoroarsenic acid and salts thereof to a non-hazardous material.

Second, hydrogen fluoride is used in the manufacture of hydrochlorofluorocarbons and hydrofluorocarbons which are considered to be substitutes for the currently used chlorofluorocarbons suspected of affecting the ozone layer. As an example of such a manufacturing process, hydrogen fluoride is reacted with vinylidene chloride or 1,1,1-trichloroethane to form 1,1-dichloro-1-fluoroethane (which is known in the art as HCFC-141b). As a result of this increased demand for higher purity hydrogen fluoride, manufacturers seek a means for recovering substantially all of the hydrogen fluoride in the distillation column bottom so as to maximize their yield of purified hydrogen fluoride and minimize production costs.

It has been attempted to convert the hexafluoroarsenic acid or salt thereof to a nonhazardous material but problems have been encountered. See commonly assigned U.S. Patent 5,089,241 for a discussion of these problems. Additionally, H.M. Dess et al, "The Preparation and Properties of Complex Fluoroarsenates", J. Am. chem. Soc. 79, 1589 (1957) state that the hexafluoroarsenate is very stable towards hydrolysis in aqueous solution and it is not even hydrolyzed by boiling a strongly caustic solution almost to dryness.

As such, the need exists in the art for a process which converts substantially all of the hazardous hexafluoroarsenic acid and salts thereof to a form that can be rendered nonhazardous, proceeds in a reasonable amount of time under reasonable conditions, and provides for the recovery of the hydrogen fluoride if desired. Commonly assigned U.S. Patent 5,089,241 provides one process which responds to the need in the art.

## SUMMARY OF THE INVENTION

We have developed another process which responds to the foregoing need in the art. The present process converts substantially all of the hexafluoroarsenic acid or salt thereof in an aqueous stream to an insoluble arsenate salt which can be rendered nonhazardous. This conversion eliminates the aforedescribed decreased capacity for higher purity hydrogen fluoride and expensive hazardous waste disposal and potential human exposure to a hazardous waste. Also, when the present process treats a hydrogen fluoride distillation column bottom, the stripping of the hydrogen fluoride from the bottom rather than disposal of it, and the subsequent recycling of the stripped hydrogen fluoride improve the overall economics of the process. Additionally, the present process operates in a commercially acceptable amount of time under reasonable conditions. Also, the present process when practiced in conjunction with one of the processes of commonly assigned U.S. Patent 4,756,899 or 4,929,435 allows the use of lower cost fluorspar having a high arsenic content.

In particular, the phrase "hexafluoroarsenic acid or salt thereof" as used herein refers to the nonvolatile pentavalent arsenic compound of commonly assigned U.S. Patents 4,756,899 and 4,929,435. It should be understood that the present invention is not limited to a hydrofluoric acid manufacturing process. The present invention may be used to treat any stream comprising hexafluoroarsenic acid or salts thereof.

Thus, the present invention provides a process for converting hexafluoroarsenic acid or salts thereof contained in an aqueous mixture to solid water insoluble arsenate salts or mixtures thereof. The process comprises the steps of: (a) adding a first compound selected from group (I) consisting of sodium carbonate, sodium hydroxide, sodium oxide, potassium carbonate, potassium hydroxide, potassium oxide, ammonium hydroxide, or mixtures thereof or from group (II) consisting of calcium carbonate, calcium chloride, calcium hydroxide, calcium oxide, magnesium carbonate, magnesium chloride, magnesium hydroxide, magnesium oxide, or mixtures thereof to the aqueous mixture in an amount sufficient to substantially neutralize the aqueous mixture to a pH greater than or equal to about 10.

If the first compound is selected from group (II) except that the first compound may not be calcium chloride or magnesium chloride, the amount of the first compound added is sufficient both to raise the pH of the aqueous mixture to greater than or equal to about 10 and also in subsequent step (b), to substantially convert fluoride ions in the starting aqueous mixture and fluoride ions liberated during the conversion of hexafluoroarsenic acid or salts thereof to solid water insoluble calcium or magnesium fluorides or mixtures thereof and to substantially hydrolyze the hexafluoroarsenic acid or salts thereof to solid water insoluble calcium or magnesium arsenates or mixtures thereof. If the first compound is selected from group (I), a second compound selected from group (II) is added in an amount sufficient to substantially convert fluoride ions in the starting aqueous mixture and fluoride ions liberated during the conversion of hexafluoroarsenic acid or salts thereof to solid water insoluble calcium or magnesium fluorides or mixtures thereof and to substantially hydrolyze the hexafluoroarsenic acid or salts thereof to solid water insoluble calcium or magnesium arsenates or mixtures thereof in subsequent step (b).

In other words, two routes exist in step (a). The first is that if the first compound added is selected from group (I), a second compound selected from group (II) is also added. The other is that if the first compound added is selected from group (II), the amount of the first compound selected from group (II) added is sufficient as set forth above and a second compound is not needed. These routes are summarized in Table I below.

TABLE I

|  | GROUP (I) | GROUP (II) |
|---|---|---|
| FIRST ROUTE | First Compound | Second Compound |
| SECOND ROUTE | --- | First Compound |

In step (b), the mixture resulting from step (a) is then reacted at a temperature sufficient and for a time sufficient to substantially convert the aqueous fluoride ions to solid water insoluble calcium or magnesium fluorides or mixtures thereof and to substantially hydrolyze the hexafluoroarsenic acid or salts thereof to solid water insoluble calcium or magnesium arsenates or mixtures thereof by removing substantially all the water from the solids.

Prior to the process of commonly assigned U.S. Patent 5,089,241 and the present invention, the mixture remaining in the distillation column bottoms after practicing the process of commonly assigned U.S. Patent 4,756,899 or 4,929,435 and others contained hazardous hexafluoroarsenic acid or a salt thereof and was recycled to the process or shipped to a hazardous waste site for disposal. In contrast, the present invention is advantageous because the hazardous hexafluoroarsenic acid or salts thereof is converted to solid water insoluble calcium or magnesium arsenates or mixtures thereof which can be stabilized by conventional waste disposal technology and then landfilled as a non-hazardous waste or recovered as a product by some other technology if desired.

Other advantages of the present invention will be apparent from the following description and attached claims.

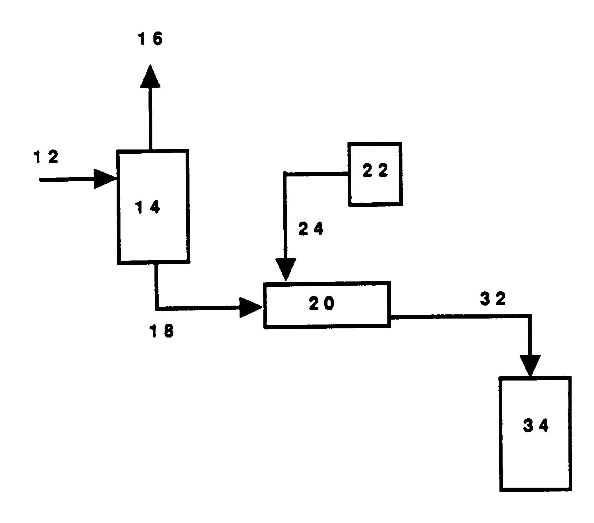

## BRIEF DESCRIPTION OF THE DRAWING

The Figure is a schematic of the present invention.

## DETAILED DESCRIPTION OF THE PREFERRED EMBODIMENTS

The present invention treats any aqueous starting stream which contains hexafluoroarsenic acid or any salt thereof. Such aqueous starting streams may also contain acids such as sulfuric, hydrofluoric, phosphoric, fluorosilicic, or fluorosulfonic; alkali such as sodium or potassium hydroxide; or suitable solvents for hexafluoroarsenic acid or salts thereof such as alcohols or mixtures thereof.

The present invention preferably treats the aqueous mixture, which contains hydrogen fluoride, remaining in the distillation column bottom after practicing the process of commonly assigned U.S. Patent 4,756,899 or 4,929,435 which are incorporated herein by reference. Such a mixture comprises about 75 to about 95 percent by weight hydrogen fluoride, about 2 to about 20 percent by weight water, up to about 5 percent by weight sulfuric acid, and up to about 5 percent by weight hexafluoroarsenic acid or any salt thereof. Generally speaking, this mixture is considered poisonous and carcinogenic because the waste contains arsenic compounds and is corrosive because the pH is less than 2.

In the United States, the stabilized waste must pass the Toxic Characteristics Leach Procedure Test (TCLP) established by the Environmental Protection Agency in order to be considered nonhazardous. Other countries have applicable regulations also. Hexafluoroarsenic acid and its salts are acid, alkali, and water soluble and technology for the stabilization of these salts is unknown. To declassify the hazardous waste to nonhazardous, it is necessary to convert the arsenic in the waste to a form that can be stabilized and will meet or exceed the appropriate local regulations for declassifying a hazardous waste.

Examples of salts of hexafluoroarsenic acid which may be present in the starting aqueous mixture include potassium hexafluoroarsenate ($KAsF_6$), sodium hexafluoroarsenate ($NaAsF_6$), ammonium hexafluoroarsenate ($NH_4AsF_6$), calcium hexafluoroarsenate ($Ca(AsF_6)_2$) and magnesium hexafluoroarsenate ($Mg(AsF_6)_2$) or any other hexafluoroarsenate salt that cannot be rendered nonhazardous.

The reason for evaporating the aqueous starting mixture is to separate most of the hydrogen fluoride for recovery and concentrate the hexafluoroarsenic acid or salt thereof for subsequent reaction thereof. Without the preheating step, the concentration of the hexafluoroarsenic acid or salt thereof would be so low and the hydrogen fluoride would be so high that a much larger amount of alkali would have to be added to complete the hydrolysis as will be explained later. The use of such additional alkali would make the present process more expensive by losing the hydrogen fluoride value, increasing the alkali usage, and increasing the volume of waste to be rendered non-hazardous.

Preferably, the starting aqueous material has a hexafluoroarsenic acid or salt thereof concentration of about 20 to about 50 percent by weight and about 10 to about 30 percent by weight hydrogen fluoride. If the starting material contains less than this concentration, an evaporation step is preferably used. Referring to the Figure, the starting aqueous mixture is transferred as indicated by the arrow 12 to evaporator 14.

In evaporator 14, the starting aqueous mixture is subjected to evaporation so as to concentrate the hexafluoroarsenic acid or salt thereof by removing substantially all of the hydrogen fluoride. Arrow 16 indicates the flow of vaporized hydrogen fluoride out of the evaporator 14; typically, the vaporized hydrogen fluoride is recycled to the beginning of the hydrogen fluoride manufacturing process. The resulting product is transferred out of evaporator 14 as indicated by arrow 18 to reactor 20.

The preferred evaporation conditions are in Table II below. The term "about" is understood to precede each numerical value in Table II.

TABLE II

|  | PREFERRED | MORE PREFERRED | MOST PREFERRED |
|---|---|---|---|
| Evaporation Temperature (°C) | 50-150 | 70-115 | 85-115 |
| Resulting Hydrogen Fluoride (wt.%) | 10-50 | 20-40 | 20-30 |
| Resulting Water (wt.%) | 20-40 | 20-30 | 20-30 |
| Resulting Hexafluoroarsenic Acid or Salt Thereof (wt.%) | 10-60 | 30-60 | 40-50 |

In step (a) of the present process, a first compound selected from group (I) consisting of commercially available sodium carbonate, sodium hydroxide, sodium oxide, potassium carbonate, potassium hydroxide, potassium oxide, ammonium hydroxide or mixtures thereof or from group (II) consisting of commercially available calcium carbonate, calcium chloride, calcium hydroxide, calcium oxide, magnesium carbonate, magnesium chloride, magnesium hydroxide, magnesium oxide, or mixtures thereof is added to the aqueous mixture in an amount sufficient to substantially neutralize the aqueous mixture to a pH greater than or equal to about 10. The amount of the group (I) first compound required for adjusting the pH to greater than or equal to about 10 is determined by the acid content of the starting mixture. Anyone skilled in the art will be able to add the correct amount of the group (I) first compound depending on the process selected. If the pH is less than 10, the reaction will not go to completion and leaching of the arsenate salt might occur.

If the first compound is selected from group (I), a second compound selected from group (II) must be added in an amount sufficient to substantially convert fluoride ions in the starting aqueous mixture and fluoride ions liberated during the conversion of the hexafluoroarsenic acid or salts thereof to water insoluble calcium or magnesium fluorides or mixtures thereof and to substantially hydrolyze the hexafluoroarsenic acid or salts thereof to solid water insoluble calcium or magnesium arsenates or mixtures thereof in subsequent step (b). The amount of the second compound sufficient to substantially convert fluoride ions in the starting aqueous mixture and fluoride ions liberated during the conversion of the hexafluoroarsenic acid or salts thereof to water insoluble calcium or magnesium fluorides or mixtures thereof and to substantially hydrolyze the hexafluoroarsenic acid or salts thereof to solid water insoluble calcium or magnesium arsenates or mixtures thereof is determined by the fluoride and hexafluoroarsenic acid or salts thereof content of the starting aqueous mixture. Anyone skilled in the art will be able to add the correct amount of the group (II) compound depending on the process selected.

If the first compound is selected from group (II) except that the first compound may not be calcium chloride or magnesium chloride, the amount of the first compound added is also sufficient to substantially convert fluoride ions in the starting aqueous mixture and fluoride ions liberated during the conversion of the hexafluoroarsenic acid or salts thereof to solid water insoluble calcium or magnesium fluorides or mixtures thereof and to substantially hydrolyze the hexafluoroarsenic acid or salts thereof to solid water insoluble calcium or magnesium arsenates or mixtures thereof in subsequent step (b). The amount of the group (II) first compound sufficient to substantially neutralize the starting aqueous mixture to a pH greater than or equal to about 10 and also sufficient to substantially convert fluoride ions in the starting aqueous mixture and fluoride ions liberated during the conversion of the hexafluoroarsenic acid or salts thereof to solid water insoluble calcium or magnesium fluorides or mixtures thereof and to substantially hydrolyze the hexafluoroarsenic acid or salts thereof to solid water insoluble calcium or magnesium arsenates or mixtures thereof is determined by the fluoride and hexafluoroarsenic acid or salts thereof content of the starting aqueous mixture. Anyone skilled in the art will be able to add the correct amount of the group (II) compound depending on the process selected.

We have found that the hydrolysis reaction of the hexafluoroarsenic ion proceeds to completion when substantially all of the fluoride ions in the starting aqueous mixture, and all of the fluoride ions generated during the hydrolysis are removed from the reaction mass by reaction with group (II) first compound or second compound to form water insoluble fluoride salts. The formation of solid water insoluble fluoride salts prevents reversal of the hydrolysis reaction.

The preferred reaction conditions for step (a) are in Table III below:

TABLE III

|  | PREFERRED | MORE PREFERRED | MOST PREFERRED |
|---|---|---|---|
| Group (I) First Compound | sodium carbonate, potassium carbonate, sodium oxide, potassium oxide, sodium hydroxide, potassium hydroxide, ammonium hydroxide | sodium hydroxide, potassium hydroxide, ammonium hydroxide | sodium hydroxide |
| Second Compound | calcium carbonate, magnesium carbonate, calcium oxide, magnesium oxide, calcium hydroxide, magnesium hydroxide, calcium chloride, magnesium chloride | calcium hydroxide, magnesium hydroxide | calcium hydroxide |

TABLE III   (continued)

|  | PREFERRED | MORE PREFERRED | MOST PREFERRED |
|---|---|---|---|
| Group (II) First Compound | calcium carbonate, magnesium carbonate, calcium oxide, magnesium oxide, calcium hydroxide, magnesium hydroxide, calcium chloride, magnesium chloride | calcium hydroxide, magnesium hydroxide | calcium hydroxide |

Reactor 20 is equipment such as a jacketed pug mill or any commercially available mixing equipment known to those skilled in the art. Reactor 20 must be made of a material which is not attacked by this corrosive mixture so as to ensure a useful life of the equipment. Accordingly, all surfaces of the reactor 20 which come into contact with the corrosive mixture should be inert to the corrosive mixture. The first and/or second compound(s) are contained in vessel 22 and are added to reactor 20 as indicated by arrow 24.

In step (b) of the present process, the mixture resulting from step (a) is dried at a temperature sufficient and for a time sufficient to substantially convert the fluoride ions to solid water insoluble calcium or magnesium fluorides or mixtures thereof and to substantially hydrolyze the hexafluoroarsenic acid or salts thereof to solid water insoluble calcium or magnesium arsenates or mixtures thereof. Preferably in step (b) of the present process, the reaction mixture is heated to a temperature of about 150°C to about 800°C. If the reaction temperature is much below 150°C, the amount of fluoride reacted is inadequate and the water is not substantially removed; the lack of appropriate materials of construction precludes the use of reaction temperatures much higher than 800°C. More preferably, the temperature of the reaction mixture is about 150°C to about 350 °C.

Although hexafluoroarsenic acid or salt will be partially converted to insoluble arsenates in the presence of fluoride ion, we have found that in order to effect transformation of substantially all of the hexafluoroarsenic acid or salt to water insoluble arsenates, substantially all of the fluoride ion must be removed from the mixture in reactor 20.

When calcium oxide is used, representative reactions which may occur are:

$$HAsF_6 + 4\,H_2O \rightarrow H_3AsO_4 + 6\,HF$$

$$2H_3AsO_4 + 3CaO \rightarrow Ca_3(AsO_4)_2 + 3H_2O$$

or the overall reaction is:

$$2\,HAsF_6 + 9\,CaO \rightarrow Ca_3(AsO_4)_2 + 6\,CaF_2 + H_2O$$

The hydrogen fluoride in the product is thus removed as $CaF_2$.

Preferably, the total reaction time is about 0.1 to about 2 hours depending on the temperature of the reaction stage.

Preferably, when calcium salt is used, the dried mixture comprises about 10 to about 60 weight percent calcium arsenate, about 40 to about 75 weight percent calcium fluoride, and about 5 to about 30 weight percent calcium sulfate. Calcium sulfate forms from sulfuric acid present in the starting aqueous mixture. More preferably, the resulting mixture comprises about 40 to about 60 weight percent calcium arsenate, about 25 to about 55 weight percent calcium fluoride, and about 5 to about 30 weight percent calcium sulfate. This mixture is typically cooled in order to make the product less corrosive and easier to handle and is removed from reactor 20 as indicated by arrow 32 to storage vessel 34.

The calcium or magnesium arsenate or mixtures thereof in the resulting mixture from storage tank 34 may be recovered or this resulting mixture can be rendered nonhazardous by the use of known methods such as discussed by Nancy J. Sell, "Solidifiers for Hazardous Waste Disposal", Pollution Engineering, 44 (August 1988) and Elio F. Arniella et al., "Solidifying Traps Hazardous Wastes", Chemical Engineering, 92 (February 1990). Typically, the dry alkaline mixture will then be rendered nonhazardous. For example, cement may then be added in various ratios to solidify and chemically stabilize the solid insoluble calcium or magnesium arsenate or mixtures thereof. When substantially all the hexafluoroarsenic acid or salts thereof are converted to the insoluble calcium or magnesium arsenate or mixtures thereof and stabilized and subjected to the EPA Toxic Characteristics Leach Procedure Test (or local regulations), the cement encased calcium arsenate meets the criteria and is considered nonhazardous.

The present invention is more fully illustrated by the following nonlimiting examples.

For the following examples, the synthetic starting material had a composition representing the material exiting the evaporator in Table IV:

TABLE IV

| Component | Wt.% |
|---|---|
| Hydrofluoric acid | 40 |
| Sulfuric acid | 8 |
| Hexafluoroarsenic acid | 20 |
| Water | 30 |
| Misc. (Fe, $PO_4$, etc) | 2 |

Under United States regulations, this waste was considered poisonous and carcinogenic because the waste contained arsenic and the waste was corrosive because the pH was < 2.

The above corrosive hazardous mixture was neutralized with calcium hydroxide to pH 10-12. Portions of this mixture were subjected to various temperatures and times of heating and to various ratios of excess calcium hydroxide as will be detailed below.

In all the following examples, the "% Total As" values included the arsenic from the calcium arsenate and any unconverted hexafluoroarsenate. The "% Direct As" values included only the arsenic from the calcium arsenate. Because of the sensitivity of the analytical techniques used for these analyses, small differences between the "Total As" and the "Direct As" indicate that substantially all the hexafluoroarsenate has been converted to the calcium arsenate.

**EXAMPLES 1-3**

For each of Examples 1 through 3, the neutralized waste of Table IV above was mixed with excess calcium hydroxide in a 1 : 1 volume ratio. Each mixture was dried at the temperature indicated in Table V below. The results are in Table V below.

TABLE V

| EX | TEMP (°C) | TIME (HOURS) | TOTAL AS (%) | DIRECT AS (%) |
|---|---|---|---|---|
| 1 | 150 | 1.5 | 1.6 | 1.5 |
| 2 | 300 | 1.0 | 1.5 | 1.5 |
| 3 | 800 | 0.5 | 3.3 | 3.3 |

The results from these examples indicate that the arsenic can be converted to calcium arsenate in a reasonable time at a reasonable temperature when the calcium available can react with both the fluoride and the arsenate. They further indicate that as the temperature increases, the hydrolysis time decreases. The higher arsenic analyses in the 800 °C run are believed to be due to the conversion of calcium hydroxide to calcium oxide.

**Examples 4-8**

Examples 4 through 8 were run with the same starting material as Examples 1-3 but with different ratios of excess calcium hydroxide. The examples were run at 150 °C for 2 hours. The results are shown in Table VI below.

TABLE VI

| EX | EXCESS $Ca(OH)_2$% | TOTAL DIRECT AS % | DIRECT AS (%) |
|---|---|---|---|
| 4 | 5 | 2.0 | 2.1 |
| 5 | 10 | 1.9 | 1.9 |
| 6 | 20 | 1.8 | 1.8 |
| 7 | 5 | 1.4 | 1.4 |
| 8 | 100 | 1.0 | 1.0 |

In the Examples, no Toxic Characteristics Leach Procedure Tests (TCLP) were run on the final calcined waste because the "total arsenic" and the "direct arsenic" values were in such good agreement. The agreement meant that the material would pass the TCLP leach test.

## EXAMPLES 9 - 13

Example 1 is repeated for Examples 9 through 13 except that the calcium or magnesium salt used is as indicated in Table VII below:

TABLE VII

| EXAMPLE | SALT |
|---------|------|
| 9 | calcium carbonate |
| 10 | calcium oxide |
| 11 | magnesium carbonate |
| 12 | magnesium hydroxide |
| 13 | magnesium oxide |

## EXAMPLES 14 - 20

Example 1 is repeated for Examples 14 through 20 except that the alkali used is as indicated in Table VIII below and calcium hydroxide is used for conversion of the fluoride ions and precipitation of the arsenate as solid water insoluble calcium arsenates:

TABLE VIII

| EXAMPLE | ALKALI |
|---------|--------|
| 14 | sodium carbonate |
| 15 | sodium hydroxide |
| 16 | sodium oxide |
| 17 | potassium carbonate |
| 18 | potassium hydroxide |
| 19 | potassium oxide |
| 20 | ammonium hydroxide |

## Claims

1. A process for converting hexafluoroarsenic acid or salts thereof contained in an aqueous mixture to solid water insoluble arsenates salts or mixtures thereof comprising the steps of:

   (a) adding a first compound selected from group (I) consisting of sodium carbonate, sodium hydroxide, sodium oxide, potassium carbonate, potassium hydroxide, potassium oxide, ammonium hydroxide or mixtures thereof or from group (II) consisting of calcium carbonate, calcium chloride, calcium hydroxide, calcium oxide, magnesium carbonate, magnesium chloride, magnesium hydroxide, magnesium oxide, or mixtures thereof to said aqueous mixture in an amount sufficient to substantially neutralize said aqueous mixture to a pH greater than or equal to about 10;

   and, if said first compound is selected from said group (II) except that said first compound is not calcium chloride or magnesium chloride, also in an amount sufficient to substantially convert fluoride ions in said aqueous mixture and fluoride ions liberated during conversion of said hexafluoroarsenic acid or salts thereof to solid water insoluble calcium or magnesium fluorides or mixtures thereof and to substantially hydrolyze said hexafluoroarsenic acid or salts thereof to solid water insoluble calcium or magnesium arsenates or mixtures thereof in subsequent step (b);

and, if said first compound is selected from said group (I) for the adjustment of the pH, adding a second compound selected from said group (II) in an amount sufficient to substantially convert fluoride ions in said aqueous mixture and fluoride ions liberated during said conversion of said hexafluoroarsenic acid or salts thereof to solid water insoluble calcium or magnesium fluorides or mixtures thereof and to substantially hydrolize said hexafluoroarsenic acid or salts thereof to solid water insoluble calcium or magnesium arsenates or mixtures thereof in subsequent step (b); and

(b) reacting said mixture resulting from step (a) at a temperature sufficient and for a time sufficient to substantially convert said fluoride ions to solid water insoluble calcium or magnesium fluorides or mixtures thereof and to substantially hydrolyze said hexafluoroarsenic acid or salts thereof to solid water insoluble calcium or magnesium arsenates or mixtures thereof.

2. The process of claim 1 wherein said starting aqueous mixture additionally contains hydrogen fluoride.

3. The process of claim 2 wherein said starting aqueous mixture compnses about 75 to about 95 percent by weight said hydrogen fluoride, about 2 to about 20 percent by weight said water, up to about 5 percent by weight sulfuric acid, and up to about 5 percent by weight hexafluoroarsenic acid or salts thereof.

4. The process of claim 1 wherein before said compound addition in said step (a), said aqueous mixture is heated to a temperature of about 50°C to about 150°C wherein said hydrogen fluoride is substantially removed.

5. The process of claim 1 wherein a salt of hexafluoroarsenate ion is hydrolyzed to arsenate salt.

6. The process of claim 5 wherein said salt is selected from the group consisting of $KAsF_6$, $NaASF_6$, $NH_4AsF_6$, $Ca(AsF_6)_2$, and $Mg(AsF_6)_2$,

7. The process of claim 1 wherein said first compound is selected from group (I).

8. The process of claim 1 wherein said first compound is selected from group (II).

9. The process of claim 1 wherein in step (b), the reaction temperature is about 150°C to about 800°C.

10. The process of claim 1 wherein calcium arsenate or magnesium arsenate is formed.

**Patentansprüche**

1. Verfahren zur Umwandlung von Hexafluorarsensäure oder deren in einer wäßrigen Mischung enthaltenen Salzen in feste wasserunlösliche Arsenatsalze oder deren Mischungen, bestehend aus den Schritten:

(a) Zugabe einer ersten Verbindung ausgewählt aus der Gruppe (I) bestehend aus Natriumcarbonat, Natriumhydroxid, Natriumoxid, Kaliumcarbonat, Kaliumhydroxid, Kaliumoxid, Ammoniumhydroxid oder deren Mischungen oder aus der Gruppe (II) bestehend aus Calciumcarbonat, Calciumchlorid, Calciumhydroxid, Calciumoxid, Magnesiumcarbonat, Magnesiumchlorid, Magnesiumhydroxid, Magnesiumoxid oder deren Mischungen zu der wäßrigen Mischung in einer zur weitgehenden Neutralisation der wäßrigen Mischung auf einen pH von mehr als oder gleich etwa 10 ausreichenden Menge,

und, falls die erste Verbindung aus der Gruppe (II) ausgewählt ist, außer wenn es sich bei der ersten Verbindung nicht um Calciumchlorid bzw. Magnesiumchlorid handelt, ebenfalls in einer zur weitgehenden Umwandlung von in der wäßrigen Mischung vorliegenden Fluoridionen und von während der Umwandlung der Hexafluorarsensäure oder deren Salzen freigesetzten Fluoridionen in feste wasserunlösliche Calcium- bzw. Magnesiumfluoride oder deren Mischungen und zur weitgehenden Hydrolyse der Hexafluorarsensäure oder von deren Salzen zu festen wasserunlöslichen Calcium- bzw. Magnesiumarsenaten oder deren Mischungen im nachfolgenden Schritt (b) ausreichenden Menge,

und, falls die erste Verbindung aus der Gruppe (I) ausgewählt ist, zur pH-Einstellung Zugabe einer zweiten Verbindung ausgewählt aus der Gruppe (II) in einer zur weitgehenden Umwandlung von in der wäßrigen Mischung vorliegenden Fluoridionen und von während der Umwandlung der Hexafluorarsensäure oder deren Salzen freigesetzten Fluoridionen in feste wasserunlösliche Calcium- bzw. Magnesiumfluoride oder deren Mischungen und zur weitgehenden Hydrolyse der Hexafluorarsensäure oder von deren Salzen zu festen wasserunlöslichen Calcium-bzw. Magnesiumarsenaten oder deren Mischungen im nachfolgenden Schritt (b) ausreichenden Menge, sowie

(b) Umsetzung der in Schritt (a) erhaltenen Mischung bei einer solchen Temperatur und über einen solchen Zeitraum, die zur weitgehenden Umwandlung der Fluoridionen in feste wasserunlösliche Calcium- bzw. Magnesiumfluoride oder deren Mischungen und zur weitgehenden Hydrolyse der Hexafluorarsensäure oder von deren Salzen zu festen wasserunlöslichen Calcium- bzw. Magnesiumarsenaten oder deren Mischungen ausreichen.

2. Verfahren nach Anspruch 1, wobei die wäßrige Ausgangsmischung zusätzlich Fluorwasserstoff enthält.

3. Verfahren nach Anspruch 2, wobei die wäßrige Ausgangsmischung etwa 75 bis etwa 95 Gew.-% Fluorwasserstoff, etwa 2 bis zu etwa 20 Gew.-% Wasser, bis zu etwa 5 Gew.-% Schwefelsäure und bis zu etwa 5 Gew.-% Hexafluorarsensäure oder deren Salze enthält.

4. Verfahren nach Anspruch 1, wobei vor Zugabe der Verbindung in Schritt (a) die wäßrige Mischung auf eine Temperatur von etwa 50°C bis etwa 150°C erhitzt wird, wodurch der Fluorwasserstoff weitgehend entfernt wird.

5. Verfahren nach Anspruch 1, wobei ein Salz des Hexafluorarsenations zu einem Arsenatsalz hydrolysiert wird.

6. Verfahren nach Anspruch 5, wobei das Salz ausgewählt ist aus der Gruppe bestehend aus $KAsF_6$, $NaAsF_6$, $NH_4AsF_6$, $Ca(AsF_6)_2$ und $Mg(AsF_6)_2$.

7. Verfahren nach Anspruch 1, wobei die erste Verbindung aus der Gruppe (I) ausgewählt ist.

8. Verfahren nach Anspruch 1, wobei die erste Verbindung aus der Gruppe (II) ausgewählt ist.

9. Verfahren nach Anspruch 1, wobei die Reaktionstemperatur in Schritt (b) etwa 150°C bis etwa 800°C beträgt.

10. Verfahren nach Anspruch 1, wobei Calciumarsenat bzw. Magnesiumarsenat gebildet wird.

## Revendications

1. Procédé pour convertir de l'acide hexafluoroarsénique ou ses sels contenus dans un mélange aqueux de sels arséniates solides insolubles dans l'eau ou de mélanges de ceux-ci, comprenant les étapes qui consistent à:

(a) ajouter un premier composé choisi dans le groupe (I) constitué par le carbonate de sodium, l'hydroxyde de sodium, l'oxyde de sodium, le carbonate de potassium, l'hydroxyde de potassium, l'oxyde de potassium, l'hydroxyde d'ammonium ou leurs mélanges, ou dans le groupe (II) constitué par le carbonate de calcium, le chlorure de calcium, l'hydroxyde de calcium, l'oxyde de calcium, le carbonate de magnésium, le chlorure de magnésium, l'hydroxyde de magnésium, l'oxyde de magnésium, ou leurs mélanges, audit mélange aqueux, en une quantité suffisante pour neutraliser essentiellement ledit mélange aqueux à un pH supérieur ou égal à environ 10;

et, si ledit premier composé est choisi dans ledit groupe (II), sauf que ledit premier composé n'est pas du chlorure de calcium ou du chlorure de magnésium, également en une quantité suffisante pour convertir essentiellement les ions fluorure dans ledit mélange aqueux en ions fluorure libérés durant la conversion dudit acide hexafluoroarsénique ou de ses sels en fluorures de calcium ou de magnésium solides, insolubles dans l'eau, ou en leurs mélanges, et pour hydrolyser essentiellement ledit acide hexafluoroarsénique ou ses sels en arséniates de calcium ou de magnésium solides, insolubles dans l'eau, ou en leurs mélanges, dans l'étape (b) suivante;
et, si ledit premier composé est choisi dans ledit groupe (I), pour l'ajustement du pH, ajouter un second composé choisi dans ledit groupe (II), en une quantité suffisante pour convertir essentiellement les ions fluorure dans ledit mélange aqueux et les ions fluorure libérés durant ladite conversion dudit acide hexafluoroarsénique ou de ses sels en fluorures de calcium ou de magnésium solides, insolubles dans l'eau, ou en leurs mélanges, et hydrolyser essentiellement ledit acide hexafluoroarsénique ou ses sels en arséniates de calcium ou de magnésium solides, insolubles dans l'eau, ou en leurs mélanges, dans l'étape (b) suivante; et

(b) faire réagir ledit mélange résultant de l'étape (a) à une température suffisante et pendant une durée suffisante pour convertir essentiellement lesdits ions fluorure en fluorures de calcium ou de magnésium solides, insolubles dans l'eau, ou en leurs mélanges, et hydrolyser essentiellement ledit acide hexafluoroarsénique ou ses sels en arséniates de calcium ou de magnésium solides, insolubles dans l'eau, ou en leurs mélanges.

2. Procédé selon la revendication 1, dans lequel ledit mélange aqueux de départ contient, en outre, du fluorure d'hydrogène.

3. Procédé selon la revendication 2, dans lequel ledit mélange aqueux de départ comprend environ 75 à environ 95% en poids dudit fluorure d'hydrogène, environ 2 à environ 20% en poids de ladite eau, jusqu'à environ 5% en poids d'acide sulfurique et jusqu'à environ 5% en poids d'acide hexafluoroarsénique ou de ses sels.

4. Procédé selon la revendication 1, dans lequel, avant l'addition dudit composé dans ladite étape (a), ledit mélange aqueux est chauffé à une température d'environ 50°C à environ 150°C, ce qui permet d'éliminer essentiellement ledit fluorure d'hydrogène.

5. Procédé selon la revendication 1, dans lequel un sel d'ion hexafluoroarséniate est hydrolysé en sel arséniate.

6. Procédé selon la revendication 5, dans lequel ledit sel est choisi dans le groupe constitué par $KAsF_6$, $NaAsF_6$, $NH_4AsF_6$, $Ca(AsF_6)_2$ et $Mg(AsF_6)_2$.

7. Procédé selon la revendication 1, dans lequel ledit premier composé est choisi dans le groupe (I).

8. Procédé selon la revendication 1, dans lequel ledit premier composé est choisi dans le groupe (II).

9. Procédé selon la revendication 1, dans lequel, dans l'étape (b), la température réactionnelle est d'environ 150°C à environ 800°C.

10. Procédé selon la revendication 1, dans lequel se forme de l'arséniate de calcium ou de l'arséniate de magnésium.

**1 6**

**1 2**

**1 4**

**2 2**

**2 4**

**2 0**

**3 2**

**1 8**

**3 4**